# EUROPÄISCHE PATENTSCHRIFT

(11) **EP 2 534 521 B1**
(45) Veröffentlichungstag und Bekanntmachung des Hinweises auf die Patenterteilung: **27.03.2019**
(21) Anmeldenummer: 11702159.2
(22) Anmeldetag: 03.01.2011
(51) Int. Cl.: G02B 21/16, G02B 21/36, G01N 21/64, G02B 27/58

(54) **VERFAHREN UND VORRICHTUNG ZUM EINSTELLEN EINES GEEIGNETEN AUSWERTEPARAMETERS FÜR EIN FLUORESZENZMIKROSKOP**
METHOD AND DEVICE FOR SETTING A SUITABLE EVALUATION PARAMETER FOR A FLUORESCENCE MICROSCOPE
PROCÉDÉ ET DISPOSITIF DE RÉGLAGE D'UN PARAMÈTRE D'INTERPRÉTATION APPROPRIÉ POUR UN MICROSCOPE À FLUORESCENCE

(30) Priorität: 12.02.2010 DE 102010007730
(43) Veröffentlichungstag der Anmeldung: 19.12.2012
(73) Patentinhaber: Leica Microsystems CMS GmbH, 35578 Wetzlar (DE)
(72) Erfinder: FÖLLING, Jonas, 69115 Heidelberg (DE)
(74) Vertreter: Schaumburg und Partner Patentanwälte mbB
(86) Internationale Anmeldenummer: PCT/EP2011/050011
(87) Internationale Veröffentlichungsnummer: WO 2011/098304

(56) Entgegenhaltungen:
- EP-A1- 2 110 697
- DE-A1- 19 919 943
- US-A1- 2008 182 336
- US-A1- 2009 242 798
- US-B1- 7 117 098

## Beschreibung

Die Erfindung betrifft ein Verfahren und eine Vorrichtung zum Einstellen eines geeigneten Auswerteparameters für ein Fluoreszenzmikroskop. Dabei werden fluoreszierende Farbstoffpartikel in einer Probe zum Fluoreszieren angeregt und Fluoreszenzlicht, das von den Farbstoffpartikeln ausgeht, wird detektiert. Es wird eine bildhafte Lichtverteilung des Fluoreszenzlichts ermittelt, die repräsentativ für eine Verteilung der Lichtmenge auf einem Detektor des Fluoreszenzmikroskops ist. Teilbereichen der bildhaften Lichtverteilung wird jeweils ein Vergleichswert zugeordnet, der repräsentativ für die Lichtmenge in dem entsprechenden Teilbereich ist. Als Auswerteparameter wird ein Schwellenwert vorgegeben. Die Vergleichswerte werden mit dem vorgegebenen Schwellenwert verglichen. Als Ereignisse werden die Teilbereiche klassifiziert, deren Vergleichswert größer als der Schwellenwert ist.

In der Fluoreszenzmikroskopie werden fluoreszierende Farbstoffpartikel in einer Probe zum Fluoreszieren angeregt. Die Farbstoffpartikel sind in der Probe an Moleküle der Probe gebunden, so dass durch Detektieren des Fluoreszenzlichts Rückschlüsse auf Strukturen und Vorgänge in der Probe gezogen werden können. Die fluoreszierenden Farbstoffpartikel werden auch als Markierungsstoffe oder Marker bezeichnet. Die fluoreszierenden Farbstoffpartikel sind entweder naturgemäß in der Probe enthalten oder werden künstlich in die Probe eingebracht und mit den Molekülen der Probe gekoppelt.

Es sind Fluoreszenzmikroskope bekannt, die Strukturen innerhalb einer Probe darstellen können, die kleiner als die beugungsbedingte Auflösungsgrenze klassischer Lichtmikroskope sind. Ferner können diese Fluoreszenzmikroskope Vorgänge darstellen, die sich innerhalb eines Bereichs abspielen, der kleiner als die beugungsbedingte Auflösungsgrenze klassischer Lichtmikroskope ist. Diese Fluoreszenzmikroskope basieren auf sequentieller stochastischer Lokalisierung von Farbstoffpartikeln. Die Farbstoffpartikel besitzen zwei voneinander unterscheidbare Zustände. In einem ersten aktiven Zustand können die Farbstoffpartikel zum Fluoreszieren angeregt werden, in einem zweiten inaktiven Zustand können die Farbstoffpartikel nicht zum Fluoreszieren angeregt werden. Ferner können die Farbstoffpartikel vom aktiven in den inaktiven oder vom inaktiven in den aktiven Zustand übergeführt werden.

Zum Unterschreiten der beugungsbedingten Auflösungsgrenze werden die Farbstoffpartikel zu einem Großteil in den inaktiven Zustand gebracht oder nur zu einem kleinen Anteil in den aktiven Zustand gebracht, so dass im Ergebnis nur ein relativ kleiner Anteil der Farbstoffpartikel im aktiven Zustand ist. Dabei kann der Schaltprozess von dem aktiven Zustand in den inaktiven Zustand oder von dem inaktiven Zustand in den aktiven Zustand auf unterschiedliche Weisen durchgeführt werden.

WO 2006/12769 A2 offenbart einen Schaltprozess von einem aktiven Zustand in einen inaktiven Zustand und dann von einem inaktiven Zustand in einen aktiven Zustand. Insbesondere werden Farbstoffpartikel verwendet, die durch Bestrahlen mit Licht einer vorgegebenen Aktivierungswellenlänge von dem inaktiven Zustand in den aktiven Zustand übergeführt werden können. Ein Teil der Farbstoffpartikel im aktiven Zustand kann mittels Bleichen wieder in den inaktiven Zustand übergeführt werden, wodurch die Untermenge aktiver Farbstoffpartikel weiter verkleinert wird. Nachfolgend werden die übrig gebliebenen aktiven Farbstoffpartikel der Untermenge mit Hilfe des Anregungslichts zum Fluoreszieren angeregt.

Aus der Druckschrift Appl.Phys.A, 88, 223-226, 2007 ist ein Verfahren bekannt, bei dem Farbstoffpartikel verwendet werden, die reversibel durch Bestrahlen mit Licht einer vorgegebenen Aktivierungswellenlänge von dem inaktiven Zustand in den aktiven Zustand übergeführt werden und reversibel durch Bestrahlen mit Licht einer Deaktivierungswellenlänge von dem aktiven Zustand in den inaktiven Zustand zurückgeführt werden können. Die aktiven Farbstoffpartikel werden mit Hilfe des Anregungslichts zum Fluoreszieren angeregt.

DE 10 2008 024 568 A1 offenbart die Verwendung von Farbstoffpartikeln, die transiente Dunkelzustände, beispielsweise Triplettzustände, besitzen. Diese werden zu einem Großteil in dem Dunkelzustand überführt und kehren selbständig mit einer vorgegebenen Wahrscheinlichkeit nach einer molekültypischen Verweildauer in den aktiven Zustand zurück. Die in den vorstehend genannten Dokumenten offenbarten Verfahren sind unter den Namen PALM, FPALM, (F)STORM, PALMIRA, dSTORM und GSDIM bekannt. All diesen Verfahren ist gemeinsam, dass lediglich eine Untermenge von Farbstoffpartikeln in den aktiven Zustand gebracht wird und in dem aktiven Zustand zum Fluoreszieren angeregt wird. Die Untermenge der aktiven Farbstoffpartikel ist so klein zu wählen, dass der mittlere Abstand benachbarter Farbstoffpartikel im aktiven Zustand größer ist als die klassische Auflösungsgrenze des abbildenden optischen Systems. Das Fluoreszenzlicht der Untermenge aktiver Farbstoffpartikel wird auf einen räumlich auflösenden Lichtdetektor, beispielsweise eine CCD-Kamera, insbesondere eine EM-CCD-Kamera abgebildet. Aufgrund des räumlich auflösenden Lichtdetektors ist nachfolgend eine bildhafte Lichtverteilung des Fluoreszenzlichts darstellbar, die repräsentativ für eine Verteilung der fluoreszierenden Farbstoffpartikel in der Probe ist. Insbesondere weist die bildhafte Lichtverteilung Lichtflecken auf, deren Größe durch die Unschärfe des abbildenden optischen Systems gegeben ist und die repräsentativ für die Farbstoffpartikel in der Probe sind. Zu jedem der Lichtflecken wird mit Hilfe bekannter Algorithmen je ein Vergleichswert ermittelt, der repräsentativ für eine den Lichtfleck verursachende Lichtmenge ist. Ist der Vergleichswert größer als ein vorgegebener Schwellenwert, so wird der Lichtfleck als Ereignis klassifiziert. Nachfolgend werden weitere Bilder mit weiteren Lichtflecken aufgenommen, die dann zumindest teilweise als Ereignisse klassifiziert werden. Abhängig von allen Ereignissen wird dann ein Bild der gesuchten Strukturen oder Vorgänge in der Probe erstellt. Der Schwellenwert kann auch als Auswerteparameter bezeichnet werden. Der Vergleichswert ist beispielsweise eine Lichtmenge, eine Lichtintensität, eine Lichtenergie oder eine Lichtdichte innerhalb des Teilbereichs der bildhafte Lichtverteilung, der den entsprechenden Lichtfleck verursacht. Die Qualität des endgültigen Bildes hängt entscheidend von der Wahl des geeigneten Auswerteparameters ab.

Ein Verfahren nach dem Oberbegriff des Anspruchs 1 ist aus der EP 2 110 697 A1 bekannt.

Aus der DE 199 19 943 A1 ist ein Verfahren zur Fluoreszenzdiagnostik für ein Mikroskop bekannt, mit dem abnormale Bereiche, z.B. Tumorgewebe, von normalen Bereichen, d.h. gesundem Gewebe, unterschieden werden sollen. Hierzu wir ein Farbbild und ein Fluoreszenzbild aufgenommen. Durch die Wahl von zwei Schwellenwerten wird die Klassifizierung der unterschiedlichen Bildbereiche vorgenommen.

Es ist Aufgabe der Erfindung, ein Verfahren zum Einstellen eines geeigneten Auswerteparameters für ein Fluoreszenzmikroskop zu schaffen, das ermöglicht, den Auswerteparameter vorteilhaft zu wählen und so ein Bild der gewünschten Strukturen bzw. Vorgänge in der Probe mit hoher Bildqualität zu erzeugen.

Die Aufgabe wird gelöst durch die Merkmale des unabhängigen Anspruchs 1. Vorteilhafte Ausgestaltungen sind in den Unteransprüchen angegeben.

Die Erfindung zeichnet sich dadurch aus, dass abhängig von dem detektierten Fluoreszenzlicht ein Signal erzeugt wird, das repräsentativ für die bildhafte Lichtverteilung ist. Abhängig von dem Signal wird eine Anzeigeeinheit so angesteuert, dass die Anzeigeeinheit die bildhafte Lichtverteilung anzeigt. Auf der Anzeigeneinheit werden die Teilbereiche mit vorgegebenen Markierungen markiert, deren Vergleichswert größer als der Schwellenwert ist. Als Auswerteparameter wird ein Schwellenwert vorgegeben. Abhängig von einer Benutzereingabe wird der Schwellenwert geändert. Nach der Benutzereingabe werden die Vergleichswerte mit dem geänderten Schwellenwert verglichen. Die markierten Teilbereiche werden als Ereignisse definiert. Ein Gesamtbild der Probe wird abhängig von den Ereignissen ermittelt wird

Das Markieren der Teilbereiche deren Vergleichswert größer als der Schwellenwert ist, ermöglicht einem Benutzer, noch vor der Klassifizierung der Ereignisse zumindest einen Auswerteparameter, insbesondere den Schwellenwert, geeignet anzupassen. Dies trägt auf überraschend einfache Weise dazu bei, dass der Schwellenwert optimal gewählt werden kann. Insbesondere kann vermieden werden, dass Lichtflecken als Ereignisse definiert werden, die durch Rauschen verursacht werden. Es werden also nur in den Teilbereichen auftretende Lichtflecken als Ereignisse definiert, die tatsächlich aufgrund fluoreszierender Farbstoffpartikel der Probe entstehen.

In einer vorteilhaften Ausgestaltung werden auf der Anzeigeeinheit die Teilbereiche markiert, deren Vergleichswert größer als der angepasste Schwellenwert ist. Der Benutzer erhält somit direkt ein Feedback, ob der geänderte Schwellenwert geeigneter ist als der ursprünglich vorgegebene Schwellenwert. Das Anzeigen der bildhaften Lichtverteilung und das Markieren der Teilbereiche können während des Betriebs des Fluoreszenzmikroskops und insbesondere während der Detektion des Fluoreszenzlichts und damit während der Aufnahme weiterer Teilbilder erfolgen. Alternativ oder zusätzlich können die aufgenommenen Teilbilder mit den entsprechenden Lichtverteilungen gespeichert werden und bei einer nachträglichen Bearbeitung können die Markierungen gesetzt werden und die Schwellenwerte angepasst werden, insbesondere auch außerhalb des Betriebs des Fluoreszenzmikroskops.

Das Gesamtbild der Probe wird erstellt indem zu jedem der Ereignisse je ein Punkt ermittelt, der repräsentativ für eine Position des das Ereignis verursachenden Farbstoffpartikels ist, beispielsweise ein Schwerpunkt oder Mittelpunkt des entsprechenden Lichtflecks der bildhaften Lichtverteilung. Bei einer Zusammenführung aller Teilbilder wird dann anhand der Punkte das Gesamtbild der Probe, insbesondere der gewünschten Strukturen und/oder Vorgänge innerhalb der Probe ermittelt.

Die beugungsbedingte Auflösungsgrenze wird vorteilhaft unterschritten, indem als Farbstoffpartikel Farbstoffpartikel verwendet werden, die einen aktiven und einen inaktiven Zustand besitzen. Bei der Aufnahme der Teilbilder wird lediglich die Untermenge der Farbstoffpartikel in den aktiven Zustand gebracht oder ein Großteil der Farbstoffpartikel wird in den inaktiven Zustand gebracht und die Untermenge der aktiven Farbstoffpartikel wird zum Fluoreszieren angeregt. Dabei wird die Untermenge aktiver Farbstoffpartikel so gewählt, dass ein mittlerer Abstand zwischen den aktiven Farbstoffpartikeln in der Probe kleiner als die klassische Auflösungsgrenze des Fluoreszenzmikroskops ist.

Ausführungsbeispiele der Erfindung sind nachfolgend anhand von schematischen Zeichnungen näher erläutert. Es zeigen:
- Fig. 1: ein Fluoreszenzmikroskop
- Fig. 2: ein erstes Teilbild,
- Fig. 3: ein zweites Teilbild,
- Fig. 4: ein drittes Teilbild,
- Fig. 5: ein viertes Teilbild,
- Fig. 6: mehrere Teilbilder und ein Gesamtbild,
- Fig. 7: ein Ablaufdiagramm eines Programms zum Ermitteln eines Gesamtbildes einer Probe.

Elemente gleicher Konstruktion oder Funktion sind figurenübergreifend mit den gleichen Bezugszeichen gekennzeichnet.

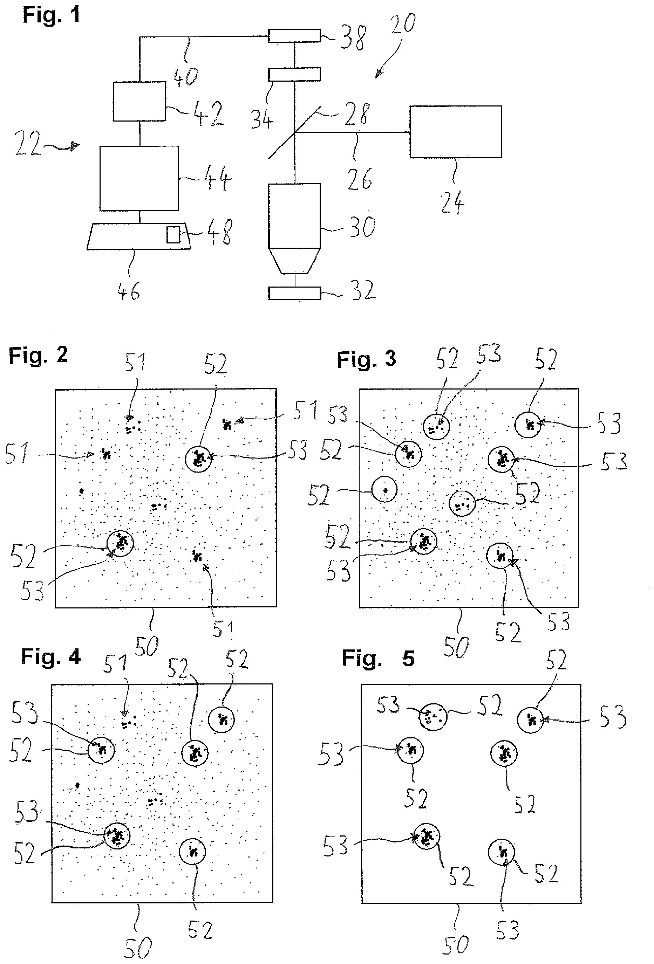

Figur 1 zeigt ein konfokales Fluoreszenzmikroskop 20 und ein Rechenterminal 22. Das Fluoreszenzmikroskop 20 umfasst eine Lichtquelle 24, die einen Lichtstrahl 26 erzeugt. Der Lichtstrahl 26 trifft auf einen Strahlteiler 28, der den Lichtstrahl 26 hin zu einem Objektiv 30 reflektiert, das den Lichtstrahl 26 auf eine Probe 32 fokussiert. Die Probe 32 umfasst fluoreszierende Farbstoffpartikel. Von der Probe 32 ausgehendes Fluoreszenzlicht durchdringt das Objektiv 30 und den Strahlteiler 28 hin zu einem Farbfilter. Das den Farbfilter 34 durchdringende Fluoreszenzlicht ist auf einen Detektor 38 gerichtet. Eine Signalleitung 40 verbindet den Detektor 38 mit einer Auswerteeinheit 42 des Rechenterminals 22. Die Auswerteeinheit 42 ist mit einer Anzeigeeinheit 44 und mit einer Tastatur 46 gekoppelt. Die Tastatur 46 weist ein Stellrad 48 auf. Das Rechenterminal 22 und das Fluoreszenzmikroskop 20 sind stark vereinfacht dargestellt. Alternativ dazu können beide Systeme weitere oder alternative Komponenten umfassen, die aus der Fluoreszenzmikroskopie bekannt sind.

Die Lichtquelle 24 umfasst eine erste nicht dargestellte Lasereinheit und eine zweite nicht dargestellte Lasereinheit. Die erste Lasereinheit erzeugt Licht einer ersten Wellenlänge, das nachfolgend als Anregungslicht bezeichnet ist. Die zweite Lasereinheit erzeugt Licht einer zweiten Wellenlänge, das nachfolgend als Aktivierungslicht bezeichnet ist. Alternativ dazu kann lediglich eine Lasereinheit vorgesehen sein, deren Licht in einen ersten Teillichtstrahl und einen zweiten Teillichtstrahl aufgespaltet wird, wobei nachfolgend die Wellenlänge eines der beiden Teillichtstrahlen konvertiert wird. Die Wellenlängen des konvertierten und des nicht konvertierten Teillichtstrahls werden so gewählt, dass einer der beiden Teillichtstrahlen der Anregungslichtstrahl und einer der Aktivierungslichtstrahl ist. Alternativ dazu kann eine breitbandige Lichtquelle, beispielsweise ein Weißlichtlaser oder eine Quecksilberdampf-Lichtquelle, vorgesehen sein, deren Licht in Teillichtstrahlen aufgespaltet wird, wobei dann die gewünschten Wellenlängen durch Filtern des erzeugten Lichts isoliert werden. Der Lichtstrahl 26 besteht aus dem kolinear vereinigten Anregungslicht und Aktivierungslicht.

Die Farbstoffpartikel in der Probe 32 sind Farbstoffpartikel, die einen aktiven und einen inaktiven Zustand aufweisen. In anderen Worten befinden sich die Farbstoffpartikel entweder im aktiven oder im inaktiven Zustand. Der Detektor 38 ist ein Flächendetektor und umfasst eine CCD-Kamera. Alternativ dazu kann der Flächendetektor als EM-CCD-Kamera ausgebildet sein.

Innerhalb der Lichtquelle 24 werden der Anregungslichtstrahl und der Aktivierungslichtstrahl kolinear vereinigt. Der Aktivierungslichtstrahl aktiviert eine Untermenge der Farbstoffpartikel in der Probe 32. Alternativ dazu können die Farbstoffpartikel zunächst aktiviert werden oder grundsätzlich im aktiven Zustand sein und mit Hilfe eines Deaktivierungslichtstrahls wieder deaktiviert werden. Alternativ oder zusätzlich können Farbstoffpartikel in aktivem Zustand in den inaktiven Zustand überführt werden, beispielsweise durch Bleichen. Ferner können Farbstoffpartikel verwendet werden, die von dem angeregten Zustand selbständig in den inaktiven Zustand übergehen und dann selbständig in den nicht angeregten aktiven Zustand übergehen, was einen Aktivierungslichtstrahl erübrigt. Der Anregungslichtstrahl regt die aktiven Farbstoffpartikel zum Fluoreszieren an. Das Fluoreszenzlicht weist andere Wellenlängen als das Anregungslicht, das Aktivierungslicht und gegebenenfalls als das Deaktivierungslicht auf.

Der Strahlteiler 28 lässt das bezüglich der Wellenlänge des Anregungs- und Aktivierungslichtstrahles verschobene Fluoreszenzlicht hin zu dem Farbfilter 34 durch. Mit Hilfe des Farbfilters 34 werden nachfolgend unterschiedliche Wellenlängebereiche aus dem Fluoreszenzlicht herausgefiltert. Das Fluoreszenzlicht der übrigen Wellenlängen wird mit Hilfe des Detektors 38 detektiert. Somit entstehen auf dem Detektor 38 mehrere Lichtflecken, deren Position auf dem Detektor 38 repräsentativ für eine Position der die Lichtflecken verursachenden Farbstoffpartikel in der Probe 32 ist.

Die Signale des Detektors 38 werden mit Hilfe der Signalleitung 40 von dem Detektor 38 zu der Auswerteeinheit 42 geleitet. Die Auswerteeinheit 42 erzeugt ein Signal, das repräsentativ für eine bildhafte Lichtverteilung auf dem Detektor 38 und damit für die Verteilung der Farbstoffpartikel ist. Das Signal steuert die Anzeigeeinheit 44 derart, dass die bildhafte Lichtverteilung auf der Anzeigeeinheit 44 dargestellt wird.

Figur 2 zeigt ein erstes Teilbild 50, das mit Hilfe des Detektors 38 aufgenommen wurde und auf der Anzeigeeinheit 44 dargestellt ist. Das erste Teilbild 50 zeigt die bildhafte Lichtverteilung mit ersten Teilbereichen 51, die Lichtflecken umfassen, die auf echte Ereignisse zurückzuführen sind, jedoch nicht als solche erkannt wurden, mit zweiten Teilbereichen 53, die auf echte Ereignisse zurückzuführen sind und auch als solche erkannt wurden, und eine Vielzahl unmarkierter kleiner Punkte und Lichtflecken, die nicht markiert wurden und die auf ein Rauschen des Detektors 38 und nicht auf echte Ereignisse zurückzuführen sind. Bei diesem Ausführungsbeispiel sind unterschiedliche Lichtmengen durch unterschiedlich dicke Punkte und unterschiedlich dicht aneinanderliegende Punkte dargestellt.

Alternativ oder zusätzlich können die unterschiedlichen Lichtmengen auch durch unterschiedlich helle Punkte dargestellt sein. Die Auswerteeinheit 42 analysiert mit Hilfe bekannter Algorithmen das Signal des Detektors 38 und bestimmt größere Lichtflecken, insbesondere Teilbereiche innerhalb der dargestellten bildhaften Lichtverteilung, innerhalb derer eine Lichtmenge größer als ein vorgegebener Schwellenwert ist. Die Lichtmenge kann auch als Vergleichswert bezeichnet werden. Die Auswerteeinheit 42 ordnet somit jedem Teilbereich oder Lichtfleck der bildhaften Lichtverteilung je einen Vergleichswert zu. Alternativ zu der Lichtmenge innerhalb der Teilbereiche kann die Lichtintensität, die Lichtdichte, die Lichtarbeit oder die Lichtenenergie innerhalb der entsprechenden Teilbereiche als Vergleichswert herangezogen werden.

Alle Teilbereiche deren Vergleichswert größer als der vorgegebene Schwellenwert ist, werden als zweite Teilbereiche 53 klassifiziert und sind mit vorgegebenen Markierungen 52 gekennzeichnet. Die vorgegebenen Markierungen 52 umfassen je einen Kreis. Alternativ dazu können die Markierungen andere geometrische Formen aufweisen oder durch unterschiedliche Farben dargestellt sein. Alle Teilbereiche deren Vergleichswert kleiner als der vorgegebene Schwellenwert ist, werden als erste Teilbereiche 51und somit als Rauschen klassifiziert und werden nicht mit vorgegebenen Markierungen 52 gekennzeichnet. Die nicht markierten Lichtflecken können jedoch durchaus durch echte Ereignisse hervorgerufen werden und Positionen von Farbstoffpartikeln in der Probe 32 entsprechen. Insbesondere die Lichtflecken in den ersten Teilbereichen 51 beruhen auf echten Ereignissen.

Figur 3 zeigt das erste Teilbild 50 nach einem Verringern des Schwellenwerts, der in dem Auswertealgorithmus zum Vergleichen mit dem Vergleichswert verwendet wird. Im Vergleich zu dem ersten Teilbild 50 gemäß Figur 2 sind nun alle größeren Lichtflecken markiert. Insbesondere sind die zweiten Teilbereiche 53 markiert, die nicht durch das Rauschen verursacht sind und die Positionen von Farbstoffpartikeln repräsentieren, und es sind zwei Teilbereiche markiert, die durch das Rauschen verursacht sind und keine Positionen von Farbstoffpartikeln in der Probe 32 repräsentieren. Der Schwellenwert wurde somit zu stark verringert.

Figur 4 zeigt das erste Teilbild 50 mit optimal gewähltem Schwellenwert. Dabei sind ausschließlich und vollständig alle zweiten Teilbereiche markiert, deren Lichtmenge nicht durch das Rauschen, sondern durch das Fluoreszieren der Farbstoffpartikel in der Probe 32 und somit durch echte Ereignisse hervorgerufen wird.

Figur 5 zeigt das Teilbild 50 nach Entfernen aller Signale außerhalb der markierten Teilbereiche 53. Die übrig gebliebenen Lichtflecken der bildhaften Lichtverteilung innerhalb der zweiten Teilbereiche 53 werden nachfolgend als Ereignisse 55 klassifiziert. Die Figur 5 dient lediglich der Erläuterung, wobei bei einer realen Verarbeitung der Teilbilder das Rauschen nicht entfernt werden muss, sondern einfach von der Auswertung ausgenommen werden kann.

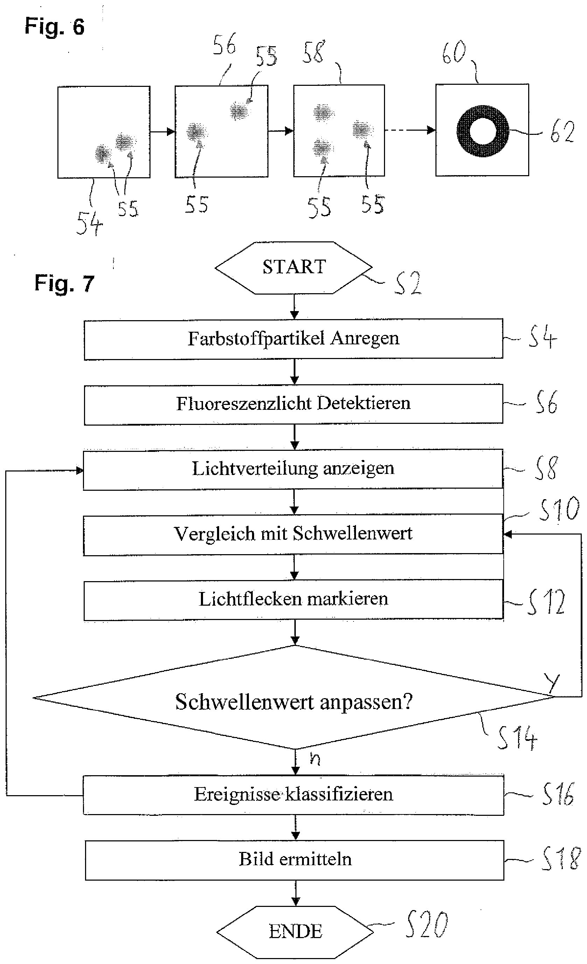

Figur 6 zeigt ein zweites Teilbild 54, ein drittes Teilbild 56 und ein viertes Teilbild 58, die nur noch die Ereignisse 55 zeigen. Zusätzlich werden noch viele weitere Teilbilder aufgenommen. Die Probe 32 wird über einen längeren Zeitraum beleuchtet und nachfolgend werden die dabei aufgenommenen Teilbilder 50, 54, 56, 58 zu einem Gesamtbild 60 zusammengefasst. Das Gesamtbild 60 zeigt eine Struktur 62 innerhalb der Probe 32. Details der dargestellten Struktur sind innerhalb der Probe 32 kleiner als die beugungsbedingte Auflösungsgrenze des Fluoreszenzmikroskops 20.

Figur 7 zeigt ein Ablaufdiagramm eines Programms zum Betreiben des Rechenterminals 22 und des Fluoreszenzmikroskops 20 und insbesondere zum Einstellen eines geeigneten Auswerteparameters für das Fluoreszenzmikroskop 20, insbesondere des Schwellenwerts. Das Programm wird in einem Schritt S2 gestartet, beispielsweise bei der Inbetriebnahme des Fluoreszenzmikroskops 20.

In einem Schritt S4 werden die Farbstoffpartikel mit Hilfe des Anregungslichts zum Fluoreszieren angeregt. Insbesondere werden die aktiven Farbstoffpartikel der Probe 32 zum Fluoreszieren angeregt. Damit mit Hilfe des Fluoreszenzmikroskops 20 Strukturen darstellbar sind, die kleiner als die beugungsbedingte Auflösungsgrenze des Fluoreszenzmikroskops 20 sind, wird lediglich eine Untermenge der Farbstoffpartikel in den aktiven Zustand gebracht. Dabei werden beispielsweise nahezu alle Farbstoffpartikel in den inaktiven Zustand gebracht, so dass lediglich die Untermenge der Farbstoffpartikel im aktiven Zustand übrig bleibt. Diese Untermenge kann dann mit Hilfe des Anregungslichtstrahles angeregt werden. Die Untermenge ist so klein, dass der mittlere Abstand der Farbstoffpartikel der Untermenge zueinander größer ist als die beugungsbedingte Auflösungsgrenze des Fluoreszenzmikroskops 20.

In einem Schritt S6 wird das Fluoreszenzlicht detektiert.

In einem Schritt S8 wird die bildhafte Lichtverteilung auf der Anzeigeeinheit 44 angezeigt.

In einem Schritt S10 werden die Vergleichswerte zu den Lichtflecken einzelner Teilbereiche der angezeigten bildhaften Lichtverteilung ermittelt und mit dem vorgegebenen Schwellenwert verglichen. Beispielsweise ist ein Referenzwert als Schwellenwert vorgegeben. Der Schwellenwert kann auch als Auswerteparameter bezeichnet werden.

In einem Schritt S12 werden die Lichtflecken und Teilbereiche mit den vorgegebenen Markierungen 52 markiert, innerhalb derer die Lichtmenge größer als der vorgegebene Schwellenwert ist.

In einem Schritt S14 wird einem Benutzer des Rechenterminals 22 die Möglichkeit gegeben, durch eine Benutzereingabe den Schwellenwert anzupassen. Falls der Benutzer den Schwellenwert ändert, so wird die Bearbeitung erneut in dem Schritt S10 fortgesetzt. Wird der Schwellenwert durch den Benutzer nicht geändert, so wird die Bearbeitung in dem Schritt S16 fortgesetzt.

In dem Schritt S16 werden die Lichtflecken innerhalb der markierten Teilbereiche als Ereignisse 55 definiert und das entsprechende Teilbild mit den Ereignissen 55 wird abgespeichert. Nachfolgend wird der Schritt S8 mit einem neuen Teilbild abgearbeitet, bis genügend Teilbilder aufgenommen wurden, um das Gesamtbild der Probe zu ermitteln. Die Schritte S4 und S6 werden dabei permanent im Hintergrund abgearbeitet.

In dem Schritt S18 werden zu jedem der Ereignisse 55 je ein Punkt ermittelt, der repräsentativ für die Position der des entsprechenden Ereignisses 55 verursachenden Farbstoffpartikels ist. Beispielsweise werden die Mittelpunkte oder Schwerpunkte der als Ereignisse 55 klassifizierten Lichtflecken ermittelt. Das Gesamtbild der Probe 32 wird dann abhängig von den Punkten ermittelt, indem die Punkte aller Teilbilder zu dem Gesamtbild 60 zusammengesetzt werden.

In einem Schritt S20 kann das Programm beendet werden. Vorzugsweise wird das Programm jedoch fortlaufend während des Betriebs des Fluoreszenzmikroskops 20 abgearbeitet. Alternativ dazu können die Schritte S2 und S4 während des Betriebs des Fluoreszenzmikroskops 20 abgearbeitet und die erfassten Rohdaten gespeichert werden. Die Auswertung der Daten gemäß den Schritten S8 bis S20 kann zu einem beliebigen Zeitpunkt, insbesondere außerhalb des Betriebs des Fluoreszenzmikroskops 20 und/oder an einem anderen Ort als der des Fluoreszenzmikroskops 20 erfolgen.

Die Erfindung ist nicht auf die angegebenen Ausführungsbeispiele beschränkt. Beispielsweise kann die Untermenge von aktiven Farbstoffpartikeln erzeugt werden, indem lediglich die Untermenge der Farbstoffpartikel von dem inaktiven Zustand in den aktiven zustand überführt werden. Alternativ dazu können als Farbstoffpartikel solche verwendet werden, die mit einer vorgegebenen Wahrscheinlichkeit selbständig in den aktiven Zustand übergehen. Dabei werden zunächst alle Farbstoffpartikel in der Probe in den inaktiven Zustand gebracht und die Bildaufnahme erfolgt nach zumindest einer Zeitdauer nach dem Deaktivieren der Farbstoffpartikel oder nach mehreren Zeitdauern. Ferner kann die bildhafte Lichtverteilung alternativ zu der Lichtmenge dadurch bestimmt werden, dass die Lichtenergie, die Lichtarbeit, die Lichtdichte oder die Lichtintensität ortsaufgelöst dargestellt wird, wobei dann der Vergleichswert entsprechend die Lichtmenge, die Lichtenergie, Lichtarbeit, die Lichtdichte bzw. die Lichtintensität ist.

### Bezugszeichenliste:

- 20: konfokales Fluoreszenzmikroskop
- 22: Rechenterminal
- 24: Lichtquelle
- 26: Lichtstrahl
- 28: Strahlteiler
- 30: Objektiv
- 32: Probe
- 34: Farbfilter
- 38: Detektor
- 40: Signalleitung
- 42: Auswerteeinheit
- 44: Anzeigeeinheit
- 46: Tastatur
- 48: Stellrad
- 50: erstes Teilbild
- 51: nicht markierter Teilbereich
- 52: Markierung
- 53: markierter Teilbereich
- 54: zweites Teilbild
- 55: Ereignis
- 56: drittes Teilbild
- 58: viertes Teilbild
- 60: Gesamtbild
- 62: Struktur

- S2 - S20: Schritte zwei bis zwanzig
- y: Schwellenwert anpassen
- n: Schwellenwert nicht anpassen
- START: Programmstart
- ENDE: Programmende

## Patentansprüche

1. Verfahren zum Einstellen eines geeigneten Auswerteparameters für ein Fluoreszenzmikroskop (20), das zur Lokalisierung von fluoreszierenden Farbstoffpartikeln verwendet wird,
wobei zur Aufnahme mehrerer Teilbilder jeweils die fluoreszierenden Farbstoffpartikel in einer Probe (32) zum Fluoreszieren angeregt werden, von den Farbstoffpartikeln ausgehendes Fluoreszenzlicht detektiert wird, eine bildhafte Lichtverteilung des Fluoreszenzlichts ermittelt wird, die repräsentativ für eine Verteilung der Lichtmenge auf einem Detektor des Fluoreszenzmikroskops ist,
ein Signal erzeugt wird, das repräsentativ für die bildhafte Lichtverteilung ist und von dem abhängig eine Anzeigeeinheit (44) so angesteuert wird, dass die Anzeigeeinheit (44) die bildhafte Lichtverteilung anzeigt, Teilbereichen der bildhaften Lichtverteilung jeweils ein Vergleichswert zugeordnet wird, der repräsentativ für die Lichtmenge in dem entsprechenden Teilbereich ist,
als Auswerteparameter ein Schwellenwert vorgegeben wird, und
die Vergleichswerte mit dem Schwellenwert verglichen werden,
**dadurch gekennzeichnet, dass** auf der Anzeigeeinheit (44) die Teilbereiche mit vorgegebenen Markierungen (52) markiert werden, deren Vergleichswerte größer als der vorgegebene Schwellenwert sind,
abhängig von einer Benutzereingabe der Schwellenwert geändert wird, nach der Benutzereingabe die Vergleichswerte mit dem geänderten Schwellenwert verglichen werden und auf der Anzeigeeinheit (44) nur diejenigen Teilbereiche mit den vorgegebenen Markierungen (52) markiert werden, deren Vergleichswerte größer als der geänderte Schwellwert sind, und diese markierten Teilbereiche als Ereignisse (53) des jeweiligen Teilbildes definiert werden und ein Gesamtbild der Probe (32) abhängig von den Ereignissen (53) aller Teilbilder ermittelt wird.

2. Verfahren nach Anspruch 1,
bei dem das Anzeigen der bildhaften Lichtverteilung und das Markieren der Teilbereiche während der Detektion des Fluoreszenzlichts erfolgt.

3. Verfahren nach Anspruch 1,
bei dem das Anzeigen der bildhaften Lichtverteilung und das Markieren der Teilbereiche nach der Detektion des Fluoreszenzlichts erfolgt.

4. Verfahren nach einem der vorstehenden Ansprüche,
bei dem das Gesamtbild ermittelt wird, indem zu den Ereignissen (53) Punkte ermittelt werden, die repräsentativ für Positionen der die Ereignisse (53) verursachenden Farbstoffpartikel sind, und bei dem ein Gesamtbild der Probe (32) abhängig von den Punkten ermittelt wird.

5. Verfahren nach einem der vorstehenden Ansprüche,
bei dem eine Untermenge aller fluoreszierenden Farbstoffpartikel der Probe von einem inaktiven Zustand in einen aktiven Zustand überführt werden und bei dem die Farbstoffpartikel in aktivem Zustand zum Fluoreszieren angeregt werden, wobei die Untermenge so viele Farbstoffpartikel enthält, dass deren mittlerer Abstand zueinander größer als die beugungsbedingte Auflösungsgrenze des Fluoreszenzmikroskops ist.

6. Verfahren nach einem der Ansprüche 1 bis 4,
bei dem eine Untermenge aller fluoreszierenden Farbstoffpartikel der Probe (32) von einem aktiven Zustand, in dem die Farbstoffpartikel zum Fluoreszieren anregbar sind, in einen inaktiven Zustand, in dem die Farbstoffpartikel nicht zum Fluoreszieren anregbar sind, überführt werden und bei dem die übrig gebliebene Untermenge von Farbstoffpartikeln in aktivem Zustand zum Fluoreszieren angeregt werden, wobei die Untermenge so viele Farbstoffpartikel enthält, dass deren mittlerer Abstand zueinander größer als die beugungsbedingte Auflösungsgrenze des Fluoreszenzmikroskops ist.

7. Verfahren nach Anspruch 6,
bei dem die Untermenge aller fluoreszierenden Farbstoffpartikel der Probe (32) von dem aktiven Zustand in den inaktiven Zustand überführt werden, indem die Probe (32) einem Bleichprozess unterzogen wird.

8. Verfahren nach einem der Ansprüche 1 bis 4,
bei dem fluoreszierende Farbstoffpartikel in die Probe (32) eingebracht werden, die mit einer vorgegebenen Wahrscheinlichkeit selbständig von einem inaktiven Zustand, in dem die Farbstoffpartikel nicht zum Fluoreszieren anregbar sind, in einen aktiven Zustand, in dem die Farbstoffpartikel zum Fluoreszieren anregbar sind, übergehen,
und bei dem alle fluoreszierenden Farbstoffpartikel der Probe (32) in den inaktiven Zustand überführt werden und bei dem nach einer vorgegebenen Zeitdauer, die abhängig von der Wahrscheinlichkeit vorgegeben wird, die Farbstoffpartikel in aktivem Zustand zum Fluoreszieren angeregt werden.

9. Verfahren nach einem der vorstehenden Ansprüche,
bei dem der Vergleichswert die gesamte Lichtmenge, Lichtenergie, Lichtarbeit, Lichtdichte oder Lichtintensität innerhalb des Teilbereichs der bildhaften Lichtverteilung ist, der der Vergleichswert zugeordnet ist.

## Claims

1. Method for setting a suitable evaluation parameter for a fluorescence microscope (20) which is used for localizing fluorescing dye particles,
wherein the fluorescing dye particles in a sample (32) are respectively excited to fluoresce for the purposes of recording a plurality of partial images, fluorescence light emanating from the dye particles is detected,
an image-like light distribution of the fluorescence light is established, said light distribution being representative for distribution of the luminous energy on a detector of the fluorescence microscope,
a signal is produced, said signal being representative for the image-like light distribution and actuated depending on a display unit (44) in such a way that the display unit (44) displays the image-like light distribution,
portions of the image-like light distribution are respectively assigned a comparison value that is representative for the luminous energy in the corresponding portion,
a threshold is predetermined as evaluation parameter and the comparison values are compared to the threshold, **characterized in that** the portions whose comparison values are greater than the predetermined threshold are marked with predetermined marks (52) on the display unit (44),
the threshold is modified dependent on a user input,
the comparison values are compared to the modified threshold after the user input and only those portions whose comparison values are greater than the modified threshold are marked with the predetermined marks (52) on the display unit (44) and these marked portions are defined as events (53) of the respective partial image and an overall image of the sample (32) is established depending on the events (53) of all partial images.

2. Method according to Claim 1,
wherein the display of the image-like light distribution and the marking of the portions is implemented while the fluorescence light is detected.

3. Method according to Claim 1,
wherein the display of the image-like light distribution and the marking of the portions is implemented after the detection of the fluorescence light.

4. Method according to any one of the preceding claims, wherein the overall image is established by virtue of points being established in relation to the events (53), said points being representative for the positions of the dye particles that cause the events (53), and wherein an overall image of the sample (32) is established depending on the points.

5. Method according to any one of the preceding claims, wherein a subset of all fluorescing dye particles of the sample are converted from an inactive state into an active state and wherein the dye particles in the active state are excited to fluoresce, wherein the subset contains so many dye particles that the mean distance thereof from one another is greater than the diffraction-limited limit of resolution of the fluorescence microscope.

6. Method according to any one of Claims 1 to 4, wherein a subset of all fluorescent dye particles of the sample (32) are converted from an active state, in which the dye particles are excitable to fluoresce, into an inactive state, in which the dye particles are not excitable to fluoresce, and wherein the remaining subset of dye particles in the active state is excited to fluoresce, wherein the subset contains so many dye particles that the mean distance thereof from one another is greater than the diffraction-limited limit of resolution of the fluorescence microscope.

7. Method according to Claim 6,
wherein the subset of all fluorescent dye particles of the sample (32) is converted from the active state into the inactive state by virtue of the sample (32) being subjected to a bleaching process.

8. Method according to any one of Claims 1 to 4, wherein fluorescing dye particles are introduced into the sample (32), said fluorescing dye particles independently converting from an inactive state, in which the dye particles are not excitable to fluoresce, into an active state, in which the dye particles are excitable to fluoresce, with a predetermined probability,
and wherein all fluorescing dye particles of the sample (32) are converted into the inactive state and wherein the dye particles in the active state are excited to fluoresce after a predetermined period of time, which is predetermined depending on the probability.

9. Method according to any one of the preceding claims, wherein the comparison value is the overall luminous energy, radiant energy, quantity of light, light density or light intensity within the portion of the image-like light distribution, to which the comparison value is assigned.

## Revendications

1. Procédé de réglage d'un paramètre d'interprétation approprié pour un microscope à fluorescence (20), lequel est utilisé pour la localisation de particules de colorant fluorescentes, en vue d'enregistrer plusieurs images partielles, les particules de colorant fluorescentes dans un échantillon (32) étant respectivement excitées en fluorescence, la lumière de fluorescence émanant des particules de colorant étant détectée, une distribution picturale de la lumière de fluorescence étant détectée, laquelle est représentative d'une distribution de la quantité de lumière sur un détecteur du microscope à fluorescence, un signal étant généré, lequel est représentatif de la distribution picturale de la lumière et une unité d'affichage (44) étant pilotée en fonction de celui-ci de telle sorte que l'unité d'affichage (44) affiche la distribution picturale de la lumière,
une valeur comparative étant respectivement attribuée aux zones partielles de la distribution picturale de la lumière, laquelle est représentative de la quantité de lumière dans la zone partielle correspondante,
une valeur de seuil étant prédéfinie en tant que paramètre de sélection et les valeurs comparatives étant comparées à la valeur de seuil,
**caractérisé en ce que** les zones partielles dont les valeurs comparatives sont supérieures à la valeur de seuil prédéfinie sont marquées sur l'unité d'affichage (44) avec des marquages (52) prédéfinis,
la valeur de seuil est modifiée en fonction d'une saisie de l'utilisateur,
après la saisie de l'utilisateur, les valeurs comparatives sont comparées avec la valeur de seuil modifiée et seules sont marquées avec les marquages (52) prédéfinis sur l'unité d'affichage (44) les zones partielles dont les valeurs comparatives sont supérieures à la valeur de seuil modifiée, et ces zones partielles marquées sont définies en tant que résultats (53) de l'image partielle respective, puis une image totale de l'échantillon (32) est déterminée en fonction des résultats (53) de toutes les images partielles.

2. Procédé selon la revendication 1, avec lequel l'affichage de la distribution picturale de la lumière et le marquage des zones partielles s'effectuent pendant la détection de la lumière de fluorescence.

3. Procédé selon la revendication 1, avec lequel l'affichage de la distribution picturale de la lumière et le marquage des zones partielles s'effectuent après la détection de la lumière de fluorescence.

4. Procédé selon l'une des revendications précédentes, avec lequel l'image totale est déterminée en déterminant, pour les résultats (53), des points qui sont représentatifs des positions des particules de colorant provoquant les résultats (53), et avec lequel une image totale de l'échantillon (32) est déterminée en fonction des points.

5. Procédé selon l'une des revendications précédentes, avec lequel un sous-ensemble de toutes les particules de colorant fluorescentes de l'échantillon sont transférées d'un état inactif à un état actif et avec lequel les particules de colorant à l'état actif sont excitées en fluorescence, le sous-ensemble contenant un nombre de particules de colorant tel que leur écart moyen entre elles est supérieur à la limite de résolution due à la diffraction du microscope à fluorescence.

6. Procédé selon l'une des revendications 1 à 4, avec lequel un sous-ensemble de toutes les particules de colorant fluorescentes de l'échantillon (32) sont transférées d'un état actif, dans lequel les particules de colorant peuvent être excitées en fluorescence, à un état actif, dans lequel les particules de colorant ne peuvent pas être excitées en fluorescence, et avec lequel le sous-ensemble restant de particules de colorant à l'état actif sont excitées en fluorescence, le sous-ensemble contenant un nombre de particules de colorant tel que leur écart moyen entre elles est supérieur à la limite de résolution due à la diffraction du microscope à fluorescence.

7. Procédé selon la revendication 6, avec lequel le sous-ensemble de toutes les particules de colorant fluorescentes de l'échantillon (32) sont transférées de l'état actif à l'état inactif en soumettant l'échantillon (32) à un processus de blanchiment.

8. Procédé selon l'une des revendications 1 à 4, avec lequel sont introduites dans l'échantillon (32) les particules de colorant fluorescentes qui, avec une probabilité prédéfinie, passent d'elles-mêmes d'un état inactif, dans lequel les particules de colorant ne peuvent pas être excitées en fluorescence, à un état actif, dans lequel les particules de colorant peuvent être excitées en fluorescence,
et avec lequel toutes les particules de colorant fluorescentes sont transférées à l'échantillon (32) à l'état inactif et avec lequel les particules de colorant à l'état actif sont excitées en fluorescence après une durée prédéfinie qui est prédéfinie en fonction de la probabilité.

9. Procédé selon l'une des revendications précédentes, avec lequel la valeur comparative est la quantité de lumière totale, l'énergie lumineuse, le travail de la lumière, la densité lumineuse ou l'intensité lumineuse à l'intérieur de la zone partielle de la distribution picturale de la lumière à laquelle est attribuée la valeur comparative.
